# EUROPÄISCHE PATENTSCHRIFT

(11) **EP 3 704 726 B1**
(45) Veröffentlichungstag und Bekanntmachung des Hinweises auf die Patenterteilung: **05.01.2022**
(21) Anmeldenummer: 18815532.9
(22) Anmeldetag: 22.11.2018
(51) Int. Cl.: H01H 3/30, F16D 11/14, F16D 41/04, F16H 33/02, H01H 3/40, H01H 33/40, F16D 23/06

(54) **SPANNGETRIEBE ZUM SPANNEN EINER SPEICHERFEDER EINES FEDERSPEICHERANTRIEBS**
CHARGING MECHANISM FOR CHARGING A STORED-ENERGY SPRING OF A STORED-ENERGY SPRING MECHANISM
MÉCANISME DE TENSION POUR TENDRE UN RESSORT ACCUMULATEUR D'UN MÉCANISME D'ENTRAÎNEMENT À ACCUMULATEUR À RESSORT

(30) Priorität: 20.12.2017 DE 102017223358
(43) Veröffentlichungstag der Anmeldung: 09.09.2020
(73) Patentinhaber: Siemens Energy Global GmbH & Co. KG, 81739 München (DE)
(72) Erfinder: BINNER, Lukas, 13088 Berlin (DE); LÖBNER, Friedrich, 10245 Berlin (DE)
(86) Internationale Anmeldenummer: PCT/EP2018/082180
(87) Internationale Veröffentlichungsnummer: WO 2019/120851

(56) Entgegenhaltungen:
- CN-U- 201 956 270
- DE-A1-102014 224 405
- US-A1- 2016 240 330

## Beschreibung

Die Erfindung betrifft ein Spanngetriebe zum Spannen einer Speicherfeder eines Federspeicherantriebs, insbesondere für einen Leistungsschalter.

Federspeicherantriebe werden insbesondere als Antriebe zum Schalten von Leistungsschaltern verwendet. Leistungsschalter sind elektrische Schalter, die für hohe elektrische Ströme und Spannungen ausgelegt sind, um insbesondere hohe Überlastströme und Kurzschlussströme sicher abschalten zu können. Dazu weisen Leistungsschalter eine Unterbrechereinheit mit wenigstens einem bewegbaren Schaltelement zum Öffnen und Schließen eines Strompfads auf. Zum Bewegen der Schaltelemente bei einem Schaltvorgang halten Leistungsschalter eine für den Schaltvorgang benötigte Energie bereit. Federspeicherantriebe speichern diese Energie in Speicherfedern, die zur Speicherung der Energie gespannt werden. Eine Speicherfeder wird beispielsweise mit einem Spannmotor gespannt, der über ein Spanngetriebe mit der Speicherfeder verbunden ist. Analog werden Federspeicherantriebe auch beispielsweise als Antriebe zum Schalten von Lasttrennschaltern verwendet.

DE 10 2014 224 405 A1 offenbart eine Vorrichtung, die eine Getriebeanordnung mit einer ersten Überholkupplung aufweist. Die erste Überholkupplung dient insbesondere der Übertragung eines Drehmomentes zwischen einem ersten Kuppelpartner sowie einem zweiten Kuppelpartner. In Abhängigkeit einer Lastflussänderung zwischen den Kuppelpartnern erfolgt ein Ein- bzw. Auskuppeln der ersten Überholkupplung. Der ersten Überholkupplung ist ein Freilaufglied zugeordnet, welches ein Einkuppeln der Kuppelpartner, insbesondere zweitweise neutralisiert.

Der Erfindung liegt die Aufgabe zugrunde, ein verbessertes Spanngetriebe zum Spannen einer Speicherfeder eines Federspeicherantriebs anzugeben.

Die Aufgabe wird durch ein Spanngetriebe mit den Merkmalen des Anspruchs 1 gelöst.

Vorteilhafte Ausgestaltungen der Erfindung sind Gegenstand der abhängigen Ansprüche.

Ein erfindungsgemäßes Spanngetriebe zum Spannen einer Speicherfeder eines Federspeicherantriebs umfasst ein an die Speicherfeder gekoppeltes Spannrad, eine an das Spannrad gekoppelte Zwischenwelle, ein von einem Spannmotor antreibbares Zwischenrad, einen an das Zwischenrad gekoppelten Freilauf und eine Klauenkupplung mit einer drehfest an die Zwischenwelle gekoppelten ersten Kupplungsbacke, einer mit dem Freilauf verbundenen zweiten Kupplungsbacke und einem zwischen den Kupplungsbacken angeordneten und drehfest an die erste Kupplungsbacke gekoppelten Synchronring, der relativ zu der ersten Kupplungsbacke parallel zu einer Drehachse der Zwischenwelle verschiebbar ist und an die zweite Kupplungsbacke gedrückt wird. Die erste Kupplungsbacke ist zwischen einer ersten Endstellung, die sie beim Spannen der Speicherfeder annimmt, und einer zweiten Endstellung, die sie in einem gespannten Zustand der Speicherfeder annimmt, parallel zu der Drehachse verschiebbar. In der ersten Endstellung liegt die erste Kupplungsbacke an der zweiten Kupplungsbacke an und schließt die Klauenkupplung. In der zweiten Endstellung sind die beiden Kupplungsbacken voneinander getrennt und die Klauenkupplung ist geöffnet. Der Synchronring koppelt bei einer Drehung relativ zu der zweiten Kupplungsbacke in einer ersten Drehrichtung um die Drehachse formschlüssig mit der zweiten Kupplungsbacke und ist bei geöffneter Klauenkupplung in einer der ersten Drehrichtung entgegengesetzten zweiten Drehrichtung um die Drehachse relativ zu der zweiten Kupplungsbacke drehbar.

Die Zwischenwelle überträgt beim Spannen der Speicherfeder Drehungen des Zwischenrads über den Freilauf und die Klauenkupplung auf das Spannrad und ermöglicht dadurch das Spannen der Speicherfeder durch den Spannmotor, der direkt oder indirekt das Zwischenrad antreibt. Die Klauenkupplung entkoppelt in dem gespannten Zustand der Speicherfeder die Zwischenwelle von dem Freilauf und dem Zwischenrad, so dass durch das Zwischenrad, insbesondere bei einem Nachlaufen des Spannmotors nach dem Spannen der Speicherfeder, keine Kräfte auf die Zwischenwelle und das Spannrad übertragen werden. Ohne die Klauenkupplung würden diese Kräfte in dem gespannten Zustand der Speicherfeder auf die Zwischenwelle und an die Zwischenwelle gekoppelte Komponenten des Spanngetriebes übertragen werden und diese verspannen und belasten. Die Klauenkupplung entlastet daher vorteilhaft die Zwischenwelle und an sie gekoppelte Komponenten des Spanngetriebes in dem gespannten Zustand der Speicherfeder.

Durch die drehfeste Kopplung der ersten Kupplungsbacke an die Zwischenwelle werden Drehungen der Zwischenwelle auf die erste Kupplungsbacke übertragen. Die Verschiebbarkeit der ersten Kupplungsbacke ermöglicht einerseits deren Kopplung an die zweite Kupplungsbacke und den Freilauf zum Spannen der Speicherfeder und andererseits die Entkopplung der Kupplungsbacken im gespannten Zustand der Speicherfeder.

Der Synchronring ermöglicht ein Synchronisieren von Drehungen der beiden Kupplungsbacken, bevor die Klauenkupplung schließt, da der Synchronring bei Drehungen relativ zu der zweiten Kupplungsbacke in einer ersten Drehrichtung formschlüssig an die zweite Kupplungsbacke koppelt, so dass die zweite Kupplungsbacke anschließend von dem Synchronring mitbewegt wird. Wenn die Klauenkupplung schließt, sind die Drehungen der beiden Kupplungsbacken daher bereits synchronisiert.

Andererseits ermöglicht der Synchronring bei geöffneter Klauenkupplung Drehungen der ersten Kupplungsbacke relativ zu der zweiten Kupplungsbacke in einer der ersten Drehrichtung entgegengesetzten zweiten Drehrichtung. Dadurch werden insbesondere Drehungen der zweiten Kupplungsbacke ermöglicht, die durch ein Nachlaufen des Spannmotors verursacht werden, wenn nach dem Spannen der Speicherfeder das Spannrad und die Zwischenwelle fest stehen und sich daher die erste Kupplungsbacke nicht drehen kann.

Eine Ausgestaltung der Erfindung sieht vor, dass der Synchronring mehrere der zweiten Kupplungsbacke zugewandte rampenförmige Vorsprünge aufweist, die um die Zwischenwelle herum angeordnet sind, und die zweite Kupplungsbacke mehrere um die Zwischenwelle herum angeordnete Kopplungszähne aufweist, an denen jeweils ein rampenförmiger Vorsprung des Synchronrings bei einer Drehung des Synchronrings relativ zu der zweiten Kupplungsbacke in der ersten Drehrichtung um die Drehachse anschlägt und über die die rampenförmigen Vorsprünge des Synchronrings bei einer Drehung des Synchronrings relativ zu der zweiten Kupplungsbacke in der zweiten Drehrichtung um die Drehachse gleiten können. Die Kopplungszähne sind beispielsweise in einer zu der Drehachse senkrechten Ebene radial zu der Drehachse nach außen gerichtet. Diese Ausgestaltung der Erfindung realisiert die oben genannte formschlüssige Kopplung des Synchronrings an die zweite Kupplungsbacke bei Drehungen relativ zu der zweiten Kupplungsbacke in der ersten Drehrichtung durch das Anschlagen der rampenförmigen Vorsprünge des Synchronrings an den Kopplungszähnen der zweiten Kupplungsbacke. Ferner realisiert diese Ausgestaltung der Erfindung die Drehungen des Synchronrings relativ zu der zweiten Kupplungsbacke in der zweiten Drehrichtung durch das Gleiten der rampenförmigen Vorsprünge des Synchronrings über die Kopplungszähne der zweiten Kupplungsbacke in der zweiten Drehrichtung.

Vorzugsweise sind die rampenförmigen Vorsprünge des Synchronrings und die Kopplungszähne der zweiten Kupplungsbacke jeweils in einer zu der Drehachse senkrechten Ebene äquidistant entlang eines Kreises um die Drehachse angeordnet. Dadurch können die rampenförmigen Vorsprünge bei Drehungen relativ zu der zweiten Kupplungsbacke in der ersten Drehrichtung gleichzeitig jeweils an einem Kopplungszahn anschlagen und bei Drehungen relativ zu der zweiten Kupplungsbacke in der zweiten Drehrichtung gleichzeitig jeweils über einen Kopplungszahn laufen.

Eine weitere Ausgestaltung der Erfindung sieht vor, dass der Synchronring vier rampenförmige Vorsprünge aufweist und die zweite Kupplungsbacke vier Kopplungszähne aufweist. Je vier rampenförmige Vorsprünge und Kopplungszähne haben sich als ein vorteilhafter Kompromiss zwischen einer Belastung der rampenförmigen Vorsprünge und Kopplungszähne und einem benötigten Abstand der rampenförmigen Vorsprünge und Kopplungszähne erwiesen. Einerseits steigt nämlich die Belastung der rampenförmigen Vorsprünge und Kopplungszähne mit abnehmender Anzahl der rampenförmigen Vorsprünge und Kopplungszähne. Andererseits wird zum formschlüssigen Koppeln der rampenförmigen Vorsprünge und Kopplungszähne ein ausreichender Abstand von den rampenförmigen Vorsprüngen und Kopplungszähnen benötigt, da sich die Kupplungsbacken schnell relativ zueinander drehen.

Eine weitere Ausgestaltung der Erfindung sieht wenigstens ein den Synchronring mit der ersten Kupplungsbacke koppelndes Federelement vor, das den Synchronring an die zweite Kupplungsbacke drückt. Dadurch wird insbesondere ermöglicht, dass der Synchronring bei axialen Verschiebungen der ersten Kupplungsbacke an die zweite Kupplungsbacke gedrückt bleibt. Ferner werden axiale Verschiebungen des Synchronrings ermöglicht, insbesondere wenn die rampenförmigen Vorsprünge des Synchronrings über die Kopplungszähne der zweiten Kupplungsbacke gleiten.

Eine weitere Ausgestaltung der Erfindung sieht vor, dass die Kupplungsbacken zueinander korrespondierende Klauen aufweisen, die in der ersten Endstellung der ersten Kupplungsbacke die beiden Kupplungsbacken bei Drehungen der ersten Kupplungsbacke relativ zu der zweiten Kupplungsbacke in der zweiten Drehrichtung formschlüssig miteinander koppeln. Dadurch wird ermöglicht, dass die erste Kupplungsbacke bei geschlossener Klauenkupplung von der zweiten Kupplungsbacke bewegt wird, nachdem die Kupplungsbacken formschlüssig miteinander gekoppelt sind.

Eine weitere Ausgestaltung der Erfindung sieht ein mit der ersten Kupplungsbacke verbundenes Koppelelement vor, das durch eine senkrecht zu der Drehachse der Zwischenwelle verlaufende Queröffnung in der Zwischenwelle geführt ist und in der Queröffnung zwischen einer eine erste Endstellung der ersten Kupplungsbacke definierenden ersten Position und einer die zweite Endstellung der ersten Kupplungsbacke definierenden zweiten Position parallel zu der Drehachse der Zwischenwelle verschiebbar ist. Das Koppelelement ist beispielsweise als ein Rohr oder Bolzen ausgebildet, dessen Längsachse senkrecht zur Drehachse der Zwischenwelle angeordnet ist und dessen Enden in Ausnehmungen in der ersten Kupplungsbacke hineinragen. Das Koppelelement ermöglicht ein Verschieben der ersten Kupplungsbacke durch ein Verschieben des Koppelelements.

Ferner ist beispielsweise ein Schaltstift vorgesehen, der in einer entlang der Drehachse der Zwischenwelle verlaufenden Längsöffnung in der Zwischenwelle verschiebbar gelagert und an das Koppelelement gekoppelt ist. Dadurch kann die erste Kupplungsbacke über das Koppelement durch Verschieben des Schaltstifts zwischen ihren Endstellungen verschoben werden.

Ferner ist beispielsweise vorgesehen, dass ein Absteuerende des Schaltstiftes aus der Längsöffnung in der Zwischenwelle herausragt und an dem Spannrad ein Absteuerelement angeordnet ist, das das Absteuerende des Schaltstifts im gespannten Zustand der Speicherfeder zu der Längsöffnung hin verschiebt, so dass das Koppelelement von seiner ersten in seine zweite Position verschoben wird. Beispielsweise weist das Absteuerelement ein radial von dem Spannrad abstehendes Kontaktende mit einer Kontaktfläche auf, die beim Verschieben des Schaltstifts an dessen Absteuerende anliegt. Durch das Absteuerelement wird das Spannrad in einer Stellung, in der die Speicherfeder gespannt ist, an den Schaltstift gekoppelt, wobei das Absteuerelement den Schaltstift verschiebt und dadurch die Klauenkupplung öffnet.

Vorzugsweise verläuft jede der beiden Kupplungsbacken ringförmig um die Zwischenwelle herum. Dadurch wird in einfacher Weise eine zuverlässige Kopplung der Klauenkupplung an die Zwischenwelle und den Freilauf ermöglicht.

Ferner ist beispielsweise eine an die erste Kupplungsbacke gekoppelte Rückstellfeder vorgesehen, die auf die erste Kupplungsbacke eine Federkraft in Richtung der zweiten Kupplungsbacke ausübt. Durch die Rückstellfeder kann die erste Kupplungsbacke zu der zweiten Kupplungsbacke geschoben werden, wenn das Absteuerelement beim Entspannen der Speicherfeder den Schaltstift freigibt. Dadurch wird die Klauenkupplung wieder geschlossen und das Spanngetriebe ist nach dem Entspannen der Speicherfeder zum erneuten Spannen der Speicherfeder bereit.

Der Freilauf weist beispielsweise einen um die Zwischenwelle herum verlaufenden Freilaufinnenring auf, mit dem die zweite Kupplungsbacke verbunden ist. Dadurch wird eine zuverlässige Kopplung der Klauenkupplung an den Freilauf ermöglicht.

Das Zwischenrad ist beispielsweise über ein Kegelradgetriebe durch den Spannmotor antreibbar. Dadurch wird eine Umlenkung der Antriebskraft des Spannmotors erreicht, die eine kompakte Bauform des Federspeicherantriebs ermöglicht.

Ferner weist das Spanngetriebe vorzugsweise einen Arretierungsmechanismus zum lösbaren Arretieren des Spannrads in einem gespannten Zustand der Speicherfeder auf. Dadurch ist das Spannrad in dem gespannten Zustand der Speicherfeder arretierbar, so dass die Speicherfeder gespannt bleibt bis die Arretierung zur Freigabe der von der Speicherfeder gespeicherten Energie gelöst wird.

Ein erfindungsgemäßer Federspeicherantrieb weist ein erfindungsgemäßes Spanngetriebe auf. Die Vorteile eines derartigen Federspeicherantriebs ergeben sich aus den oben genannten Vorteilen eines erfindungsgemäßen Spanngetriebes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische und teilweise geschnittene Darstellung eines Spanngetriebes,
- FIG 2: einen vergrößerten Ausschnitt der Figur 1,
- FIG 3: eine erste perspektivische Darstellung einer Zwischenwelle, eines Zwischenrades und einer Klauenkupplung,
- FIG 4: eine zweite perspektivische Darstellung einer Zwischenwelle, eines Zwischenrades und einer Klauenkupplung,
- FIG 5: eine perspektivische Darstellung einer Zwischenwelle und einer Klauenkupplung,
- FIG 6: eine perspektivische Darstellung einer ersten Kupplungsbacke,
- FIG 7: eine perspektivische Darstellung einer zweiten Kupplungsbacke,
- FIG 8: eine perspektivische Darstellung eines Synchronrings.

Einander entsprechende Teile sind in den Figuren mit denselben Bezugszeichen versehen.

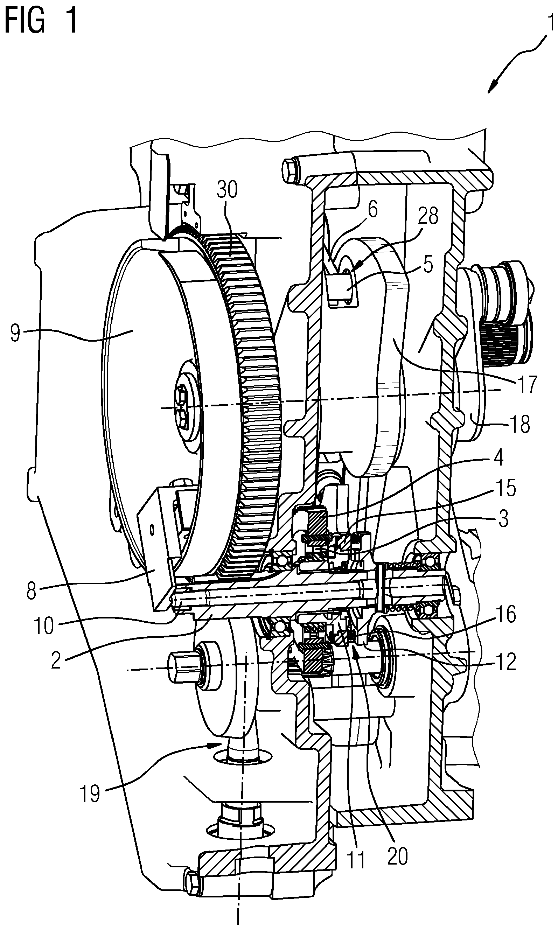

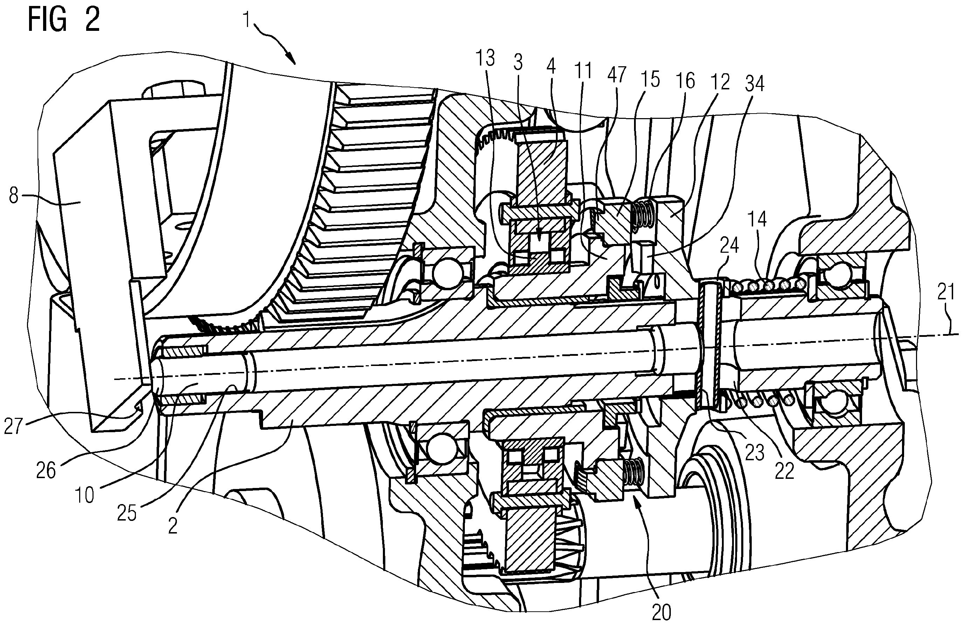

Die Figuren 1 und 2 zeigen ein Spanngetriebe 1 zum Spannen einer (nicht dargestellten) Speicherfeder eines Federspeicherantriebs in einer perspektivischen und teilweise geschnittenen Darstellung, wobei Figur 2 einen vergrößerten Ausschnitt der Figur 1 zeigt. Die Speicherfeder ist beispielsweise eine Einschaltfeder des Federspeicherantriebs, die Energie zum Schließen eines Strompfads eines Leistungsschalters speichert. Das Spanngetriebe 1 umfasst unter anderem ein Spannrad 9, eine Zwischenwelle 2 und ein Zwischenrad 4.

Das Spannrad 9 ist fest mit einer Kurvenscheibe 17 und einer Spannwelle 18 verbunden und über die Spannwelle 18 an die Speicherfeder gekoppelt.

Das Zwischenrad 4 ist über ein Kegelradgetriebe 19 von einem (nicht dargestellten) Spannmotor antreibbar.

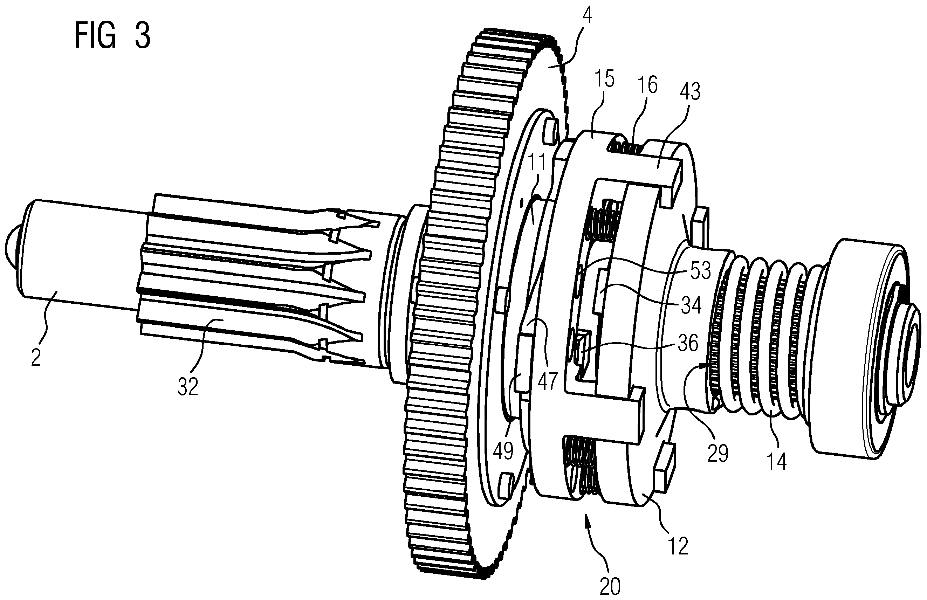

Die Zwischenwelle 2 ist an das Spannrad 9 und das Zwischenrad 4 gekoppelt, um zum Spannen der Speicherfeder Drehungen des Zwischenrads 4 auf das Spannrad 9 zu übertragen. Die Kopplung zwischen der Zwischenwelle 2 und dem Spannrad 9 ist eine Zahnradkopplung, die von einem Zahnkranz 30 des Spannrads 9 und einem dazu korrespondierenden Zahnradring 32 (siehe die Figuren 3 bis 5) der Zwischenwelle 2 gebildet wird.

Das Zwischenrad 4 ist über einen Freilauf 3 und eine Klauenkupplung 20 an die Zwischenwelle 2 gekoppelt, wobei der Freilauf 3 das Zwischenrad 4 mit der Klauenkupplung 20 verbindet. Die Klauenkupplung 20 weist eine drehfest an die Zwischenwelle 2 gekoppelte erste Kupplungsbacke 12, eine mit einem Freilaufinnenring 13 des Freilaufs 3 verbundene zweite Kupplungsbacke 11, einen zwischen den Kupplungsbacken 11, 12 angeordneten Synchronring 15 und Federelemente 16 auf. Die Kupplungsbacken 11, 12 und der Synchronring 15 verlaufen jeweils ringförmig um die Zwischenwelle 2.

Die erste Kupplungsbacke 12 ist zwischen zwei Endstellungen axial, das heißt parallel zu einer Drehachse 21 der Zwischenwelle 2, verschiebbar. In einer ersten Endstellung der ersten Kupplungsbacke 12 ist die Klauenkupplung 20 geschlossen und koppelt den Freilauf 3 und das Zwischenrad 4 zum Spannen der Speicherfeder an die Zwischenwelle 2. Dabei liegen die Kupplungsbacken 11, 12 aneinander an. In der zweiten Endstellung der ersten Kupplungsbacke 12 sind die Kupplungsbacken 11, 12 voneinander getrennt und die Klauenkupplung 20 ist geöffnet. Dadurch koppelt die Klauenkupplung 20 den Freilauf 3 und das Zwischenrad 4 zum Spannen der Speicherfeder an die Zwischenwelle 2 und entkoppelt den Freilauf 3 und das Zwischenrad 4 in dem gespannten Zustand der Speicherfeder von der Zwischenwelle 2.

Der Synchronring 15 ist drehfest an die erste Kupplungsbacke 12 gekoppelt und relativ zu der ersten Kupplungsbacke 12 axial verschiebbar. Dazu weist der Synchronring 15 axial verlaufende Zähne 43 auf, die in dazu korrespondierende Aussparungen 45 in der ersten Kupplungsbacke 12 hineinragen (siehe die Figuren 3 bis 6 und 8). Alternativ kann die erste Kupplungsbacke 12 axial verlaufende Zähne aufweisen, die in dazu korrespondierende Aussparungen in dem Synchronring 15 hineinragen. Andere drehfeste, aber axial verschiebbare Verbindungen des Synchronrings 15 mit der ersten Kupplungsbacke 12 sind ebenfalls möglich. Die Federelemente 16 verlaufen axial zwischen der ersten Kupplungsbacke 12 und dem Synchronring 15, so dass die Federelemente 16 axial wirkende Federkräfte zwischen dem Synchronring 15 und der ersten Kupplungsbacke 12 ausüben.

Der Synchronring 15 wird durch die Federelemente 16 an die zweite Kupplungsbacke 11 gedrückt. Der Synchronring 15 koppelt in unten näher beschriebener Weise bei einer Drehung relativ zu der zweiten Kupplungsbacke 11 in einer ersten Drehrichtung um die Drehachse 21 formschlüssig mit der zweiten Kupplungsbacke 11 und ist in einer der ersten Drehrichtung entgegengesetzten zweiten Drehrichtung um die Drehachse 21 relativ zu der zweiten Kupplungsbacke 11 bei geöffneter Klauenkupplung 20 drehbar (siehe dazu die Figuren 3 bis 8 und deren Beschreibung). Dadurch synchronisiert der Synchronring 15 die Drehungen der beiden Kupplungsbacken 11, 12 bei Drehungen der ersten Kupplungsbacke 12 relativ zu der zweiten Kupplungsbacke 11 in der ersten Drehrichtung.

Der Freilauf 3 entkoppelt das Zwischenrad 4 von der Zwischenwelle 2 beim Spannen der Speicherfeder, wenn die Spannwelle 18 über einen oberen Totpunkt läuft.

Um die erste Kupplungsbacke 12 drehfest und axial verschiebbar an die Zwischenwelle 2 zu koppeln, weisen die erste Kupplungsbacke 12 und die Zwischenwelle 2 eine Verzahnung 29 auf (siehe die Figuren 3 bis 6).

Um die erste Kupplungsbacke 12 von ihrer ersten Endstellung in die zweite Endstellung zu verschieben, weist die Zwischenwelle 2 im Bereich der ersten Kupplungsbacke 12 eine langlochartige Queröffnung 22 auf, die senkrecht zu der Drehachse 21 durch die Zwischenwelle 2 verläuft. Durch die Queröffnung 22 ist ein mit der ersten Kupplungsbacke 12 verbundenes Koppelement 23 geführt, das in der Queröffnung 22 zwischen einer die erste Endstellung der ersten Kupplungsbacke 12 definierenden ersten Position und einer die zweite Endstellung der ersten Kupplungsbacke 12 definierenden zweiten Position verschiebbar ist. In dem in den Figuren dargestellten Ausführungsbeispiel ist das Koppelement 23 als ein Rohr ausgebildet, dessen Enden in Ausnehmungen 24 in der ersten Kupplungsbacke 12 hineinragen. Alternativ kann das Koppelement 23 aber auch beispielsweise als ein Bolzen ausgeführt sein.

Ferner weist die Zwischenwelle 2 eine entlang ihrer Drehachse 21 verlaufende Längsöffnung 25 auf, die sich von der Queröffnung 22 zu einem spannradseitigen Ende der Zwischenwelle 2 erstreckt. In der Längsöffnung 25 ist ein Schaltstift 10 axial verschiebbar gelagert, der ein aus der Längsöffnung 25 herausragendes Absteuerende 26 aufweist und sich in der Längsöffnung 25 bis zu dem Koppelement 23 erstreckt.

An dem Spannrad 9 ist ein Absteuerelement 8 angeordnet, das das Absteuerende 26 des Schaltstifts 10 im gespannten Zustand der Speicherfeder zu der Längsöffnung 25 hin verschiebt. Das Absteuerelement 8 weist ein radial von dem Spannrad 9 abstehendes Kontaktende mit einer Kontaktfläche 27 auf, die beim Verschieben des Schaltstifts 10 an dessen Absteuerende 26 anliegt. Das Absteuerelement 8 ist beispielsweise an einer Position an dem Spannrad 9 angeordnet, in der die Kontaktfläche 27 das Absteuerende 26 des Schaltstifts 10 kontaktiert, wenn sich das Spannrad 9 etwa drei Grad weitergedreht hat, nachdem die Spannwelle 18 den oberen Totpunkt erreicht hat.

An die erste Kupplungsbacke 12 ist ferner eine Rückstellfeder 14 gekoppelt, die helixartig um die Zwischenwelle 2 herum verläuft. Die Rückstellfeder 14 greift an einem von der zweiten Kupplungsbacke 11 abgewandten Ende der ersten Kupplungsbacke 12 an und übt auf die erste Kupplungsbacke 12 eine Federkraft in Richtung der zweiten Kupplungsbacke 11 aus.

Das Spanngetriebe 1 weist außerdem einen Arretierungsmechanismus 28 zum lösbaren Arretieren des Spannrads 9 in dem gespannten Zustand der Speicherfeder auf. Der Arretierungsmechanismus 28 des in den Figuren gezeigten Ausführungsbeispiels weist eine an der Kurvenscheibe 17 angeordnete Kurvenscheibenrolle 5 und eine Einklinke 6, die die Kurvenscheibenrolle 5 zum Arretieren des Spannrads 9 fixiert, auf. Nach dem Trennen der Kupplungsbacken 11, 12 läuft die Kurvenscheibenrolle 5 gegen die Einklinke 6 und wird von der Einklinke 6 in dieser Position arretiert, beispielsweise wenn sich das Spannrad 9 etwa zehn Grad weitergedreht hat, nachdem die Spannwelle 18 den oberen Totpunkt erreicht hat. Dadurch wird ein Abprallen der Kurvenscheibenrolle 5 von der Einklinke 6 durch die geöffnete Klauenkupplung 20 ermöglicht und damit eine Verspannung des Freilaufs 3 verhindert.

Im gespannten Zustand der Speicherfeder werden die Zwischenwelle 2 und an sie gekoppelte Komponenten wie die Einklinke 6 und die Kurvenscheibenrolle 5 durch die Klauenkupplung 20 von dem Zwischenrad 4 entkoppelt, um nicht durch das Zwischenrad 4, beispielsweise bei einem Nachlaufen des Spannmotors, belastet und verspannt zu werden. Dadurch werden vorteilhaft insbesondere die Belastung der Einklinke 6, der Kurvenscheibenrolle 5 und des Freilaufs 3 reduziert und eine Abnutzung oder Schädigung dieser Komponenten des Spanngetriebes 1 durch diese Belastung verhindert.

Zur Freigabe der in der gespannten Speicherfeder gespeicherten Energie wird die Kopplung der Einklinke 6 an die Kurvenscheibenrolle 5 gelöst. Die sich entspannende Speicherfeder dreht das Spannrad 9 in derselben Drehrichtung wie beim Spannen der Speicherfeder, wodurch das Absteuerelement 8 den Schaltstift 10 wieder freigibt und die erste Kupplungsbacke 12 durch die Rückstellfeder 14 zu der zweiten Kupplungsbacke 11 geschoben wird, so dass die Klauenkupplung 20 wieder geschlossen wird. Dadurch ist das Spanngetriebe 1 zum erneuten Spannen der Speicherfeder bereit.

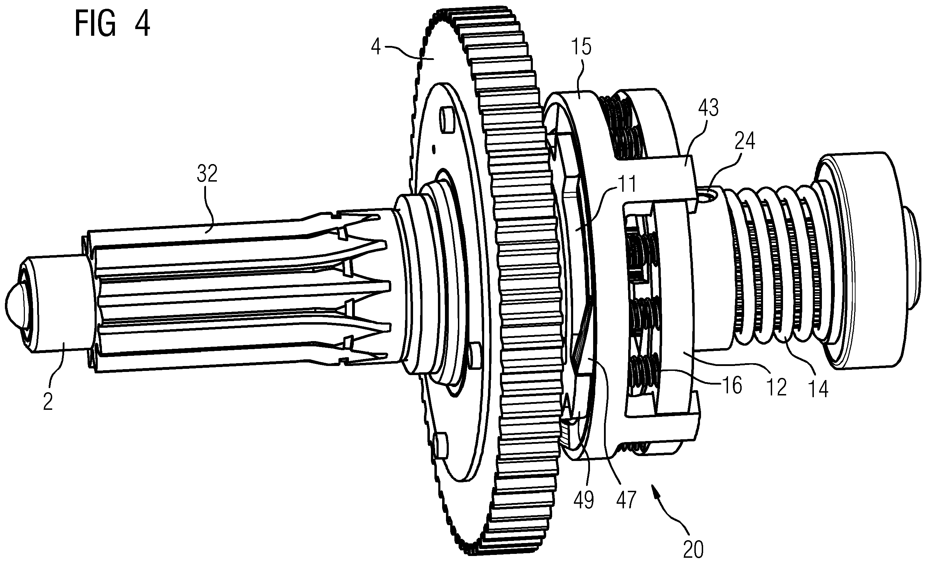

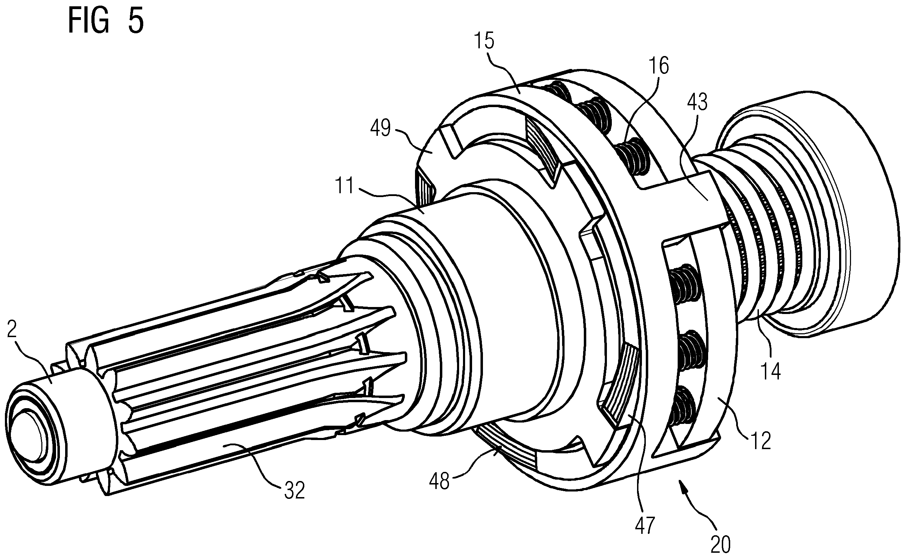

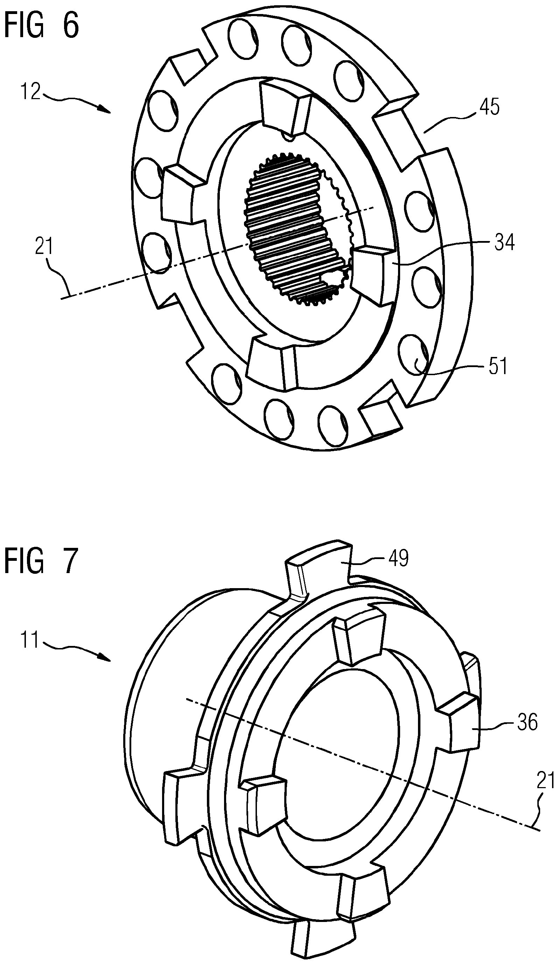

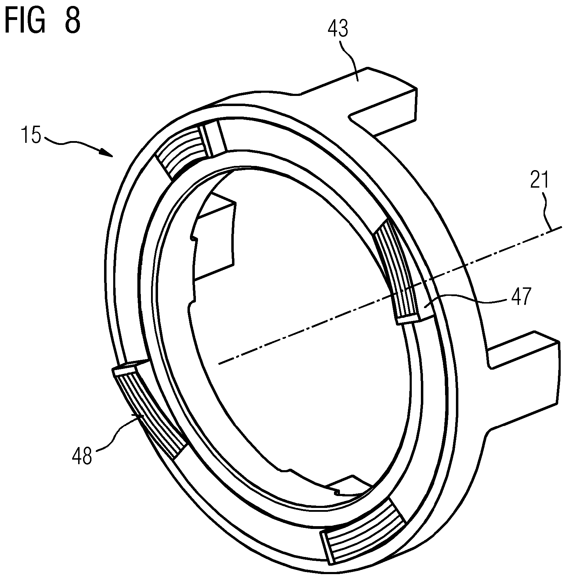

Die Figuren 3 bis 8 zeigen die Klauenkupplung 20 und deren Komponenten sowie deren Kopplung an die Zwischenwelle 2. Dabei zeigen die Figuren 3 und 4 verschiedene perspektivische Darstellungen der Zwischenwelle 2, des Zwischenrades 4 und der Klauenkupplung 20, Figur 5 zeigt eine perspektivische Darstellung der Zwischenwelle 2 und der Klauenkupplung 20, Figur 6 zeigt eine perspektivische Darstellung der ersten Kupplungsbacke 12, Figur 7 zeigt eine perspektivische Darstellung der zweiten Kupplungsbacke 11 und Figur 8 zeigt eine perspektivische Darstellung des Synchronrings 15.

Der Synchronring 15 weist vier der zweiten Kupplungsbacke 11 zugewandte rampenförmige Vorsprünge 47 auf, die in einer zu der Drehachse 21 senkrechten Ebene äquidistant entlang eines Kreises um die Drehachse 21 angeordnet sind. Die rampenförmigen Vorsprünge 47 weisen Schrägflächen 48 auf, die gegenüber dieser Ebene derart geneigt sind, dass alle Schrägflächen 48 entlang des Kreises in einer Umlaufrichtung gegenüber der Ebene ansteigen.

Die zweite Kupplungsbacke 1 weist vier Kopplungszähne 49 auf, die in einer zu der Drehachse 21 senkrechten Ebene äquidistant entlang eines Kreises um die Drehachse 21 angeordnet und radial zu der Drehachse 21 nach außen gerichtet sind, so dass sie die am weitesten nach außen ragenden Abschnitte der zweiten Kupplungsbacke 11 bilden. Wie in den Figuren 3 bis 5 gezeigt ist, schlägt an den Kopplungszähnen 49 jeweils ein rampenförmiger Vorsprung 47 des Synchronrings 15 bei einer Drehung des Synchronrings 15 relativ zu der zweiten Kupplungsbacke 11 in der ersten Drehrichtung um die Drehachse 21 an. Dadurch wird bei einer solchen Drehung der oben genannte Formschluss des Synchronrings 15 mit der zweiten Kupplungsbacke 11 hergestellt, der die Drehungen der beiden Kupplungsbacken 11, 12 synchronisiert.

Bei einer Drehung des Synchronrings 15 relativ zu der zweiten Kupplungsbacke 11 in einer der ersten Drehrichtung entgegengesetzten zweiten Drehrichtung um die Drehachse 21 können die rampenförmigen Vorsprünge 47 auf ihren Schrägflächen 48 über die Kopplungszähne 49 gleiten. Während die rampenförmigen Vorsprünge 47 über die Kopplungszähne 49 gleiten, wird der Synchronring 15 gegen die Federelemente 16 axial von der zweiten Kupplungsbacke 11 weg verschoben. Nach dem Gleiten der rampenförmigen Vorsprünge 47 über die Kopplungszähne 49 wird der Synchronring 15 durch die Federelemente 16 in der entgegengesetzten Richtung zu der zweiten Kupplungsbacke 11 hin axial verschoben. Dadurch kann sich der Synchronring 15 bei geöffneter Klauenkupplung 20 relativ zu der zweiten Kupplungsbacke 11 in der zweiten Drehrichtung drehen. Dies ermöglicht insbesondere eine Drehung der zweiten Kupplungsbacke 11, die durch ein Nachlaufen des Spannmotors verursacht wird, wenn das Spannrad 9 nach dem Spannen der Speicherfeder durch den Arretierungsmechanismus 28 arretiert ist und daher auch die erste Kupplungsbacke 12 fest steht.

Die Kupplungsbacken 11, 12 weisen zueinander korrespondierende Klauen 34, 36 auf, die in der ersten Endstellung der ersten Kupplungsbacke 12 die beiden Kupplungsbacken 11, 12 bei Drehungen der ersten Kupplungsbacke 12 relativ zu der zweiten Kupplungsbacke 11 in der zweiten Drehrichtung formschlüssig miteinander koppeln.

Dabei weist die erste Kupplungsbacke 12 vier erste Klauen 34 auf, die in einer zu der Drehachse 21 senkrechten Ebene äquidistant entlang eines Kreises um die Drehachse 21 angeordnet sind. Die zweite Kupplungsbacke 11 weist vier zweite Klauen 36 auf, die ebenfalls in einer zu der Drehachse 21 senkrechten Ebene äquidistant entlang eines Kreises um die Drehachse 21 angeordnet sind. Die Klauen 34, 36, rampenförmigen Vorsprünge 47 und Kopplungszähne 49 sind dabei derart angeordnet, dass keine erste Klaue 34 einer zweiten Klaue 36 direkt gegenübersteht, wenn die rampenförmigen Vorsprünge 47 an den Kopplungszähnen 49 anschlagen. Beispielsweise korrespondieren die Positionen der ersten Klauen 34 zu den Positionen der rampenförmigen Vorsprünge 47, so dass die Position jeder ersten Klaue 34 wenigstens annähernd in einer von der Drehachse 15 begrenzten Halbebene liegt, in der auch die Position eines rampenförmigen Vorsprungs 47 liegt. Entsprechend korrespondieren auch die Positionen der zweiten Klauen 36 zu den Positionen der Kopplungszähne 49. Unter einer Position einer Klaue 34, 36 wird hier die Position eines geometrischen Schwerpunkts der Klaue 34, 36 verstanden. Entsprechend sind die Positionen der rampenförmigen Vorsprünge 47 und der Kopplungszähne 49 definiert.

Die Federelemente 16 sind als Schraubenfedern ausgeführt, die sich jeweils zwischen einer ersten Federausnehmung 51 in der ersten Kupplungsbacke 12 und einer zweiten Federausnehmung 53 in dem Synchronring 15 erstrecken. In dem in den Figuren gezeigten Ausführungsbeispiel sind zwischen je zwei benachbarten Zähnen 43 des Synchronrings 15 drei Federelemente 16 angeordnet, wobei in Figur 3 nicht alle Federelemente 16 dargestellt sind. In anderen Ausführungsbeispielen kann eine andere Anzahl von Federelementen 16 vorgesehen sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Spanngetriebe (1) zum Spannen einer Speicherfeder eines Federspeicherantriebs, das Spanngetriebe (1) umfassend
- ein an die Speicherfeder gekoppeltes Spannrad (9),
- eine an das Spannrad (9) gekoppelte Zwischenwelle (2),
- ein von einem Spannmotor antreibbares Zwischenrad (4) und
- einen an das Zwischenrad (4) gekoppelten Freilauf (3), **gekennzeichnet durch**
- eine Klauenkupplung (20) mit einer drehfest an die Zwischenwelle (2) gekoppelten ersten Kupplungsbacke (12), einer mit dem Freilauf (3) verbundenen zweiten Kupplungsbacke (11) und einem zwischen den Kupplungsbacken (11, 12) angeordneten und drehfest an die erste Kupplungsbacke (12) gekoppelten Synchronring (15), der relativ zu der ersten Kupplungsbacke (12) parallel zu einer Drehachse (21) der Zwischenwelle (2) verschiebbar ist und an die zweite Kupplungsbacke (11) gedrückt wird,
- wobei die erste Kupplungsbacke (12) zwischen einer ersten Endstellung, in der sie an der zweiten Kupplungsbacke (11) anliegt und die sie beim Spannen der Speicherfeder annimmt, und einer zweiten Endstellung, in der sie von der zweiten Kupplungsbacke (11) getrennt ist und die sie in einem gespannten Zustand der Speicherfeder annimmt, parallel zu der Drehachse (21) verschiebbar ist
- und der Synchronring (15) bei einer Drehung relativ zu der zweiten Kupplungsbacke (11) in einer ersten Drehrichtung um die Drehachse (21) formschlüssig mit der zweiten Kupplungsbacke (11) koppelt und bei geöffneter Klauenkupplung (20) in einer der ersten Drehrichtung entgegengesetzten zweiten Drehrichtung um die Drehachse (21) relativ zu der zweiten Kupplungsbacke (11) drehbar ist.

2. Spanngetriebe (1) nach Anspruch 1,
**dadurch gekennzeichnet, dass** der Synchronring (15) mehrere der zweiten Kupplungsbacke (11) zugewandte rampenförmige Vorsprünge (47) aufweist, die um die Zwischenwelle (2) herum angeordnet sind, und die zweite Kupplungsbacke (11) mehrere um die Zwischenwelle (2) herum angeordnete Kopplungszähne (49) aufweist, an denen jeweils ein rampenförmiger Vorsprung (47) des Synchronrings (15) bei einer Drehung des Synchronrings (15) relativ zu der zweiten Kupplungsbacke (11) in der ersten Drehrichtung um die Drehachse (21) anschlägt und über die die rampenförmigen Vorsprünge (47) des Synchronrings (15) bei einer Drehung des Synchronrings (15) relativ zu der zweiten Kupplungsbacke (11) in der zweiten Drehrichtung um die Drehachse (21) gleiten können.

3. Spanngetriebe (1) nach Anspruch 2,
**dadurch gekennzeichnet, dass** die Kopplungszähne (49) in einer zu der Drehachse (21) senkrechten Ebene radial zu der Drehachse (21) nach außen gerichtet sind.

4. Spanngetriebe (1) nach Anspruch 2 oder 3,
**dadurch gekennzeichnet, dass** die rampenförmigen Vorsprünge (47) des Synchronrings (15) und die Kopplungszähne (49) der zweiten Kupplungsbacke (11) jeweils in einer zu der Drehachse (21) senkrechten Ebene äquidistant entlang eines Kreises um die Drehachse (21) angeordnet sind.

5. Spanngetriebe (1) nach einem der Ansprüche 2 bis 4, **dadurch gekennzeichnet, dass** der Synchronring (15) vier rampenförmige Vorsprünge (47) aufweist und die zweite Kupplungsbacke (11) vier Kopplungszähne (49) aufweist.

6. Spanngetriebe (1) nach einem der vorhergehenden Ansprüche, **gekennzeichnet durch** wenigstens ein den Synchronring (15) mit der ersten Kupplungsbacke (11) koppelndes Federelement (16), das den Synchronring (15) an die zweite Kupplungsbacke (11) drückt.

7. Spanngetriebe (1) nach einem der vorhergehenden Ansprüche, **dadurch gekennzeichnet, dass** die Kupplungsbacken (11, 12) zueinander korrespondierende Klauen (34, 36) aufweisen, die in der ersten Endstellung der ersten Kupplungsbacke (12) die beiden Kupplungsbacken (11, 12) bei Drehungen der ersten Kupplungsbacke (12) relativ zu der zweiten Kupplungsbacke (11) in der zweiten Drehrichtung formschlüssig miteinander koppeln.

8. Spanngetriebe (1) nach einem der vorhergehenden Ansprüche, **gekennzeichnet durch** ein mit der ersten Kupplungsbacke (12) verbundenes Koppelelement (23), das durch eine senkrecht zu der Drehachse (21) der Zwischenwelle (2) verlaufende Queröffnung (22) in der Zwischenwelle (2) geführt ist und in der Queröffnung (22) zwischen einer eine erste Endstellung der ersten Kupplungsbacke (12) definierenden ersten Position und einer die zweite Endstellung der ersten Kupplungsbacke (12) definierenden zweiten Position parallel zu der Drehachse (21) der Zwischenwelle (2) verschiebbar ist.

9. Spanngetriebe (1) nach Anspruch 8,
**dadurch gekennzeichnet, dass** das Koppelelement (23) als ein Rohr oder Bolzen ausgebildet ist, dessen Längsachse senkrecht zur Drehachse (21) der Zwischenwelle (2) angeordnet ist und dessen Enden in Ausnehmungen (24) in der ersten Kupplungsbacke (12) hineinragen.

10. Spanngetriebe (1) nach Anspruch 8 oder 9,
**gekennzeichnet durch** einen Schaltstift (10), der in einer entlang der Drehachse (21) der Zwischenwelle (2) verlaufenden Längsöffnung (25) in der Zwischenwelle (2) verschiebbar gelagert und an das Koppelelement (23) gekoppelt ist.

11. Spanngetriebe (1) nach Anspruch 10,
**dadurch gekennzeichnet, dass** ein Absteuerende (26) des Schaltstifts (10) aus der Längsöffnung (25) herausragt und an dem Spannrad (9) ein Absteuerelement (8) angeordnet ist, das das Absteuerende (26) des Schaltstifts (10) im gespannten Zustand der Speicherfeder zu der Längsöffnung (25) hin verschiebt, so dass das Koppelelement (23) von seiner ersten in seine zweite Position verschoben wird.

12. Spanngetriebe (1) nach Anspruch 11,
**dadurch gekennzeichnet, dass** das Absteuerelement (8) ein radial von dem Spannrad (9) abstehendes Kontaktende mit einer Kontaktfläche (27) aufweist, die beim Verschieben des Schaltstifts (10) an dessen Absteuerende (26) anliegt.

13. Spanngetriebe (1) nach einem der vorhergehenden Ansprüche,
**gekennzeichnet durch** eine an die erste Kupplungsbacke (12) gekoppelte Rückstellfeder (14), die auf die erste Kupplungsbacke (12) eine Federkraft in Richtung der zweiten Kupplungsbacke (11) ausübt.

14. Spanngetriebe (1) nach einem der vorhergehenden Ansprüche,
**gekennzeichnet durch** einen Arretierungsmechanismus (28) zum lösbaren Arretieren des Spannrads (9) in einem gespannten Zustand der Speicherfeder.

15. Federspeicherantrieb mit einem gemäß einem der vorhergehenden Ansprüche ausgebildeten Spanngetriebe (1).

## Claims

1. Tensioning mechanism (1) for tensioning an accumulator spring of a spring stored energy mechanism, the tensioning mechanism (1) comprising
- a tensioning gear (9) coupled to the accumulator spring,
- an intermediate shaft (2) coupled to the tensioning gear (9),
- an intermediate gear (4) that is drivable by a tensioning motor, and
- a freewheel (3) coupled to the intermediate gear (4), **characterized by**
- a dog clutch (20) with a first clutch block (12) coupled fixedly to the intermediate shaft (2) so as to rotate with it, a second clutch block (11) connected to the freewheel (3), and a synchronizer ring (15) arranged between the clutch blocks (11, 12) and coupled fixedly to the first clutch block (12) so as to rotate with it, said synchronizer ring (15) being displaceable parallel to an axis of rotation (21) of the intermediate shaft (2) relative to the first clutch block (12) and being pressed onto the second clutch block (11),
- wherein the first clutch block (12) is displaceable parallel to the axis of rotation (21) between a first end position, in which it bears against the second clutch block (11) and which it assumes in the case of tensioning of the accumulator spring, and a second end position, in which it is disconnected from the second clutch block (11) and which it assumes in a tensioned state of the accumulator spring,
- and the synchronizer ring (15) couples in a positively locking manner to the second clutch block (11) in the case of a rotation about the axis of rotation (21) in a first direction of rotation relative to the second clutch block (11), and, in the case of an open dog clutch (20), can be rotated about the axis of rotation (21) in a second direction of rotation, opposite to the first direction of rotation, relative to the second clutch block (11).

2. Tensioning mechanism (1) according to Claim 1, **characterized in that** the synchronizer ring (15) has a plurality of ramp-like projections (47) which face the second clutch block (11) and are arranged around the intermediate shaft (2), and the second clutch block (11) has a plurality of coupling teeth (49) which are arranged around the intermediate shaft (2) and against which in each case one ramp-like projection (47) of the synchronizer ring (15) bears in the case of a rotation of the synchronizer ring (15) about the axis of rotation (21) in the first direction of rotation relative to the second clutch block (11), and over which the ramp-like projections (47) of the synchronizer ring (15) can slide in the case of a rotation of the synchronizer ring (15) about the axis of rotation (21) in the second direction of rotation relative to the second clutch block (11).

3. Tensioning mechanism (1) according to Claim 2, **characterized in that** the coupling teeth (49) are directed towards the outside radially with respect to the axis of rotation (21) in a plane perpendicular to the axis of rotation (21).

4. Tensioning mechanism (1) according to Claim 2 or 3, **characterized in that** the ramp-like projections (47) of the synchronizer ring (15) and the coupling teeth (49) of the second clutch block (11) are arranged equidistantly along a circle about the axis of rotation (21) in each case in a plane perpendicular to the axis of rotation (21).

5. Tensioning mechanism (1) according to one of Claims 2 to 4,
**characterized in that** the synchronizer ring (15) has four ramp-like projections (47) and the second clutch block (11) has four coupling teeth (49).

6. Tensioning mechanism (1) according to one of the preceding claims,
**characterized by** at least one spring element (16) that couples the synchronizer ring (15) to the first clutch block (11) and presses the synchronizer ring (15) onto the second clutch block (11) .

7. Tensioning mechanism (1) according to one of the preceding claims,
**characterized in that** the clutch blocks (11, 12) have dogs (34, 36) that correspond to one another and, in the first end position of the first clutch block (12), couple the two clutch blocks (11, 12) to one another in a positively locking manner in the case of rotations of the first clutch block (12) in the second direction of rotation relative to the second clutch block (11).

8. Tensioning mechanism (1) according to one of the preceding claims,
**characterized by** a coupling element (23) which is connected to the first clutch block (12), is guided through a transverse opening (22) in the intermediate shaft (2), said transverse opening (22) extending perpendicularly to the axis of rotation (21) of the intermediate shaft (2), and is displaceable parallel to the axis of rotation (21) of the intermediate shaft (2) in the transverse opening (22) between a first position that defines a first end position of the first clutch block (12) and a second position that defines the second end position of the first clutch block (12).

9. Tensioning mechanism (1) according to Claim 8, **characterized in that** the coupling element (23) is configured as a tube or bolt, the longitudinal axis of which is arranged perpendicularly to the axis of rotation (21) of the intermediate shaft (2) and the ends of which protrude into recesses (24) in the first clutch block (12).

10. Tensioning mechanism (1) according to Claim 8 or 9, **characterized by** a switching pin (10) which is mounted so as to be displaceable in a longitudinal opening (25) in the intermediate shaft (2), said longitudinal opening (25) extending along the axis of rotation (21) of the intermediate shaft (2), and is coupled to the coupling element (23).

11. Tensioning mechanism (1) according to Claim 10, **characterized in that** a resetting end (26) of the switching pin (10) protrudes out of the longitudinal opening (25), and a resetting element (8) is arranged on the tensioning gear (9), said resetting element (8) displacing the resetting end (26) of the switching pin (10) towards the longitudinal opening (25) in the tensioned state of the accumulator spring, with the result that the coupling element (23) is displaced from its first into its second position.

12. Tensioning mechanism (1) according to Claim 11, **characterized in that** the resetting element (8) has a contact end that projects radially from the tensioning gear (9) and has a contact face (27) which bears against the resetting end (26) of the switching pin (10) during the displacement thereof.

13. Tensioning mechanism (1) according to one of the preceding claims,
**characterized by** a restoring spring (14) which is coupled to the first clutch block (12) and exerts a spring force in the direction of the second clutch block (11) on the first clutch block (12).

14. Tensioning mechanism (1) according to one of the preceding claims,
**characterized by** a locking mechanism (28) for releasably locking the tensioning gear (9) in a tensioned state of the accumulator spring.

15. Spring stored energy mechanism having a tensioning mechanism (1) configured according to one of the preceding claims.

## Revendications

1. Mécanisme (1) de tension pour tendre un ressort accumulateur d'un entraînement à accumulateur à ressort, le mécanisme (1) de tension comprenant
- une roue (9) de tension accouplée au ressort accumulateur,
- un arbre (2) intermédiaire accouplé à la roue (9) de tension,
- une roue (4) intermédiaire pouvant être entraînée par un moteur de tension et
- une roue libre (3) accouplée à la roue (4) intermédiaire, **caractérisé par**
- un accouplement (20) à griffes ayant une première mâchoire (12) d'accouplement solidaire en rotation de l'arbre (2) intermédiaire, une deuxième mâchoire (11) d'accouplement reliée à la roue libre (3) et un anneau (15) de synchronisation monté entre les mâchoires (11, 12) d'accouplement et solidaire en rotation de la première mâchoire (12) d'accouplement, anneau (15) qui peut coulisser par rapport à la première mâchoire (12) d'accouplement parallèlement à un axe (21) de rotation de l'arbre (2) intermédiaire et être poussé sur la deuxième mâchoire (11) d'accouplement,
- dans lequel la première mâchoire (12) d'accouplement peut coulisser parallèlement à l'axe (21) de rotation entre une première position d'extrémité, dans laquelle elle s'applique à la deuxième mâchoire (11) d'accouplement et qu'elle prend lors de la tension du ressort accumulateur, et une deuxième position d'extrémité, dans laquelle elle est séparée de la deuxième mâchoire (11) d'accouplement et qu'elle prend dans un état tendu du ressort accumulateur
- et l'anneau (15) de synchronisation s'accouple à complémentarité de forme avec la deuxième mâchoire (11) d'accouplement lors d'une rotation par rapport à la deuxième mâchoire (11) d'accouplement dans un premier sens de rotation autour de l'axe (21) de rotation et, lorsque l'accouplement (20) à griffes est ouvert, peut tourner par rapport à la deuxième mâchoire (11) d'accouplement dans un deuxième sens de rotation, contraire au premier sens de rotation, autour de l'axe (21) de rotation.

2. Mécanisme (1) de tension suivant la revendication 1, **caractérisé en ce que** l'anneau (15) de synchronisation a plusieurs saillies (47) en forme de rampes, qui sont tournées vers la deuxième mâchoire (11) d'accouplement et qui sont disposées autour de l'arbre (2) intermédiaire et la deuxième mâchoire (11) d'accouplement a plusieurs dents (49) d'accouplement, qui sont disposées autour de l'arbre (2) intermédiaire et sur lesquelles respectivement une saillie (47) en forme de rampe de l'anneau (15) de synchronisation vient en butée lors d'une rotation de l'anneau (15) de synchronisation par rapport à la deuxième mâchoire (11) d'accouplement dans le premier sens de rotation autour de l'axe (21) de rotation et par lesquelles les saillies (47) en forme de rampes de l'anneau (15) de synchronisation peuvent glisser lors d'une rotation de l'anneau (15) de synchronisation par rapport à la deuxième mâchoire (11) d'accouplement dans le deuxième sens de rotation autour de l'axe (21) de rotation.

3. Mécanisme (1) de tension suivant la revendication 2, **caractérisé en ce que** les dents (29) d'accouplement sont dirigées vers l'extérieur radialement par rapport à l'axe (21) de rotation dans un plan perpendiculaire à l'axe (21) de rotation.

4. Mécanisme (1) de tension suivant la revendication 2 ou 3, **caractérisé en ce que** les saillies (47) en forme de rampes de l'anneau (15) de synchronisation et les dents (49) d'accouplement de la deuxième mâchoire (11) d'accouplement sont montées respectivement dans un plan perpendiculaire à l'axe (21) de rotation en étant équidistantes le long d'un cercle autour de l'axe (21) de rotation.

5. Mécanisme (1) de tension suivant l'une des revendications 2 à 4, **caractérisé en ce que** l'anneau (15) de synchronisation a quatre saillies (47) en forme de rampes et la deuxième mâchoire (11) d'accouplement a quatre dents (49) d'accouplement.

6. Mécanisme (1) de tension suivant l'une des revendications précédentes,
**caractérisé en ce qu'**au moins un élément (16) de ressort accouplant l'anneau (15) de synchronisation à la première mâchoire (11) d'accouplement pousse l'anneau (15) de synchronisation sur la deuxième mâchoire (11) d'accouplement.

7. Mécanisme (1) de tension suivant l'une des revendications précédentes,
**caractérisé en ce que** les mâchoires (11, 12) d'accouplement ont des griffes (34, 36) qui se correspondent entre elles et qui, dans la première position d'extrémité de la première mâchoire (12) d'accouplement, accouplent entre elles à complémentarité de forme les deux mâchoires (11, 12) d'accouplement lors de rotations de la première mâchoire (12) d'accouplement par rapport à la deuxième mâchoire (11) d'accouplement dans le deuxième sens de rotation.

8. Mécanisme (1) de tension suivant l'une des revendications précédentes,
**caractérisé par** un élément (23) d'accouplement, qui est relié à la première mâchoire (12) d'accouplement, qui est guidé dans une ouverture (22) transversale, s'étendant perpendiculairement à l'axe (21) de rotation de l'arbre (2) intermédiaire, de l'arbre (2) intermédiaire et qui peut coulisser parallèlement à l'axe (21) de rotation de l'arbre (2) intermédiaire dans l'ouverture (22) transversale entre une première position définissant une première position d'extrémité de la première mâchoire (12) d'accouplement et une deuxième position définissant la deuxième position d'extrémité de la première mâchoire (12) d'accouplement.

9. Mécanisme (1) de tension suivant la revendication 8, **caractérisé en ce que** l'élément (23) d'accouplement est constitué sous la forme d'un tube ou d'un axe, dont l'axe longitudinal est disposé perpendiculairement à l'axe (21) de rotation de l'arbre (2) intermédiaire et dont les extrémités pénètrent dans des évidements (24) de la première mâchoire (12) d'accouplement.

10. Mécanisme (1) de tension suivant la revendication 8 ou 9, **caractérisé par** une broche (10) de manœuvre, qui est montée coulissante dans l'arbre (2) intermédiaire dans une ouverture (25) longitudinale s'étendant suivant l'axe (21) de rotation de l'arbre (2) intermédiaire et qui est accouplée à l'élément (23) d'accouplement.

11. Mécanisme (1) de tension suivant la revendication 10, **caractérisé en ce qu'**une extrémité (26) de commande de la broche (10) de manœuvre sort de l'ouverture (25) longitudinale et sur la roue (9) de tension est disposé un élément (8) de commande, qui déplace l'extrémité (26) de commande de la broche (10) de manœuvre lorsque le ressort accumulateur est à l'état tendu déplacé vers l'ouverture (25) longitudinale de manière à faire passer l'élément (23) d'accouplement de sa première à sa deuxième position.

12. Mécanisme (1) de tension suivant la revendication 11, **caractérisé en ce que** l'élément (8) de commande a une extrémité de contact, qui est en saillie radialement de la roue (9) de tension et qui a une surface (27) de contact qui, lors du déplacement de la broche (10) de manœuvre, s'applique à son extrémité (26) de commande.

13. Mécanisme (1) de tension suivant l'une des revendications précédentes,
**caractérisé par** un ressort (14) de rappel, qui est accouplé à la première mâchoire (12) d'accouplement et qui applique à la première mâchoire (12) d'accouplement une force de ressort en direction de la deuxième mâchoire (11) d'accouplement.

14. Mécanisme (1) de tension suivant l'une des revendications précédentes,
**caractérisé par** un mécanisme (28) de blocage pour bloquer de manière amovible la roue (9) de tension dans un état tendu du ressort accumulateur.

15. Entraînement à accumulateur à ressort, ayant un mécanisme (1) de tension constitué suivant l'une des revendications précédentes.
